# FASCICULE DE BREVET EUROPEEN

(11) **EP 0 508 841 B1**
(45) Date de publication et mention de la délivrance du brevet: **21.12.1994**
(21) Numéro de dépôt: 92400466.6
(22) Date de dépôt: 24.02.1992
(51) Int. Cl.: B60S 1/34, B60S 1/52

(54) **Bras d'essuie-glace, notamment pour véhicule à grande vitesse**
Scheibenwischerarm, insbesondere für Hochgeschwindigkeitsfahrzeuge
Windscreen wiper arm, in particular for high-speed vehicles

(30) Priorité: 11.04.1991 FR 9104428
(43) Date de publication de la demande: 14.10.1992
(73) Titulaire: Forges de Belles Ondes, F-75009 Paris (FR)
(72) Inventeur: Chevrier, Pascal, F-77330 Ozoir la Ferrière (FR); Fabeau, Edmond, F-95580 Andilly (FR)
(74) Mandataire: Peuscet, Jacques

(56) Documents cités:
- EP-A- 0 147 782
- DE-A- 1 530 629
- DE-A- 3 504 549
- GB-A- 2 082 051
- US-A- 3 440 679

## Description

L'invention est relative à un bras d'essuie-glace, notamment pour véhicule à grande vitesse, ce bras étant destiné à être monté, à une extrémité, sur un arbre d'entraînement propre à lui communiquer un mouvement de rotation alternatif, ledit bras étant équipé, à son extrémité éloignée de l'arbre d'entraînement, d'un balai d'essuie-glace, et étant articulé, au voisinage de l'arbre d'entraînement, sur un axe sensiblement parallèle à la surface de la glace à essuyer, le bras étant rappelé par des moyens élastiques contre la glace.

L'invention concerne plus particulièrement, parce que c'est dans ce cas que son application semble devoir présenter le plus d'intérêt, mais non exclusivement, un bras d'essuie-glace pour train à très grande vitesse.

US-A-3 440 679 montre un dispositif d'essuie-glace de ce genre, comportant un bras formé d'un élément tubulaire ; un organe d'orientation fixe par rapport au bâti de la glace est prévu au voisinage de l'arbre d'entraînement ; l'extrémité du bras éloignée de l'arbre d'entraînement porte un levier monté rotatif, relativement au bras, autour d'un axe sensiblement parallèle à l'arbre d'entraînement, le balai d'essuie-glace étant porté par ce levier. Des moyens de liaison sont prévus à l'intérieur de l'élément tubulaire constituant le bras, de manière à maintenir une longueur constante entre le susdit organe d'orientation et un point du levier, ledit bras comportant une base articulée sur une chape montée sur l'arbre d'entraînement. Dans une variante de réalisation, illustrée par la figure 9 de US-A-3 440 679, l'organe d'orientation comporte un point d'appui fixe sur lequel sont articulés les susdits moyens de liaison. Ce dispositif est agencé pour que le bras et le balai soient masqués lorsqu'ils ne sont pas utilisés. Ainsi, en position de repos, le balai est sensiblement parallèle au bord inférieur du pare-brise, tandis qu'en position extrême vers l'intérieur, le balai est sensiblement parallèle au montant voisin du pare-brise. Lors du mouvement de rotation du bras, le balai ne reste donc pas parallèle à lui-même. En outre, il n'est pas possible, sans l'abîmer, de relever le bras d'un angle important pour éloigner au maximum le balai de la glace, notamment pour faciliter une opération de maintenance, telle qu'un changement de balai. Les moyens de liaison formés par une tige et les diverses articulations s'opposent à un tel relevage, sauf à déformer les pièces d'une manière inadmissible.

L'invention a pour but, surtout, de fournir un bras d'essuie-glace du genre défini précédemment, qui permette, d'une manière connue en elle-même, de déplacer le balai d'essuie-glace parallèlement à une direction fixe, et, en outre, de relever le bras.

L'invention a également pour but de fournir un bras d'essuie-glace qui offre une prise au vent réduite, tout en étant robuste.

Selon l'invention, un bras d'essuie-glace, notamment pour véhicule à grande vitesse, destiné à être monté, à une extrémité, sur un arbre d'entraînement propre à lui communiquer un mouvement de rotation alternatif, ledit bras étant équipé, à son extrémité éloignée dudit arbre, d'un balai d'essuie-glace et étant articulé, au voisinage de l'arbre d'entraînement, sur un axe sensiblement parallèle à la surface de la glace à essuyer, le bras étant rappelé par des moyens élastiques contre la glace, ledit bras d'essuie-glace étant formé d'un élément tubulaire ; un organe d'orientation comportant un point d'appui fixe par rapport au bâti de la glace étant prévu au voisinage de l'arbre d'entraînement ; l'extrémité du bras éloignée de l'arbre d'entraînement portant un levier monté rotatif, relativement au bras, autour d'un axe sensiblement parallèle à l'arbre d'entraînement, le balai d'essuie-glace étant porté par ce levier, et des moyens de liaison articulés sur le point d'appui fixe étant prévus à l'intérieur de l'élément tubulaire constituant le bras, de manière à maintenir une longueur constante entre le susdit point d'appui fixe et un point du levier lors de la rotation du bras, ledit bras comportant une base articulée sur une chape montée sur l'arbre d'entraînement (Bras du type divulgué par US-A-3,440,679, est caractérisé par le fait que les moyens de liaison et les articulations sont agencés afin de maintenir le levier parallèle à une direction fixe lors de la rotation du bras, le balai d'essuie-glace lié au levier se déplaçant ainsi parallèlement à lui-même, et, qu'en outre les articulations de la base sur la chape du bras et des susdits moyens de liaison sur le point d'appui fixe sont disposées de manière à avoir leurs axes alignés pour une position angulaire déterminée du bras relativement au bâti et à permettre le relevage du bras, des moyens de butée étant prévus entre la base du bras et la chape pour s'opposer au relevage du bras lorsque la position angulaire du bras relativement au bâti est différente de celle assurant l'alignement des susdits axes.

De préférence, l'élément tubulaire constituant le bras est coudé.

Les moyens de liaison comprennent, de préférence, une tige flexible, notamment en matière plastique, disposée à l'intérieur de l'élément tubulaire.

La tige flexible peut s'étendre de l'organe d'appui fixe jusqu'au point du levier, en traversant le coude de l'élément tubulaire, cette tige flexible étant suffisamment résistante pour ne pas s'aplatir et garder une longueur constante lors de sa flexion.

En variante, la tige flexible n'est prévue que sur une fraction de la longueur de l'élément tubulaire incorporant le coude, cette tige flexible étant prolongée à chacune de ses extrémités par des tiges rigides rectilignes.

Avantageusement, le bras, en particulier au niveau du balai, est équipé de deux séries de gicleurs, en vue du nettoyage de la glace, chaque série étant alimentée en liquide par une conduite indépendante portée par le bras, sous sa partie inférieure.

Des moyens d'alimentation sont prévus pour alimenter successivement chaque série de gicleurs lors des mouvements d'aller et retour du bras ; ceci permet de réaliser une économie de liquide.

Avantageusement, les gicleurs d'une série ont leurs axes inclinés suivant une direction tandis que les gicleurs de l'autre série ont leurs axes inclinés suivant une autre direction, l'alimentation des gicleurs étant conçue de manière que l'arrosage de la glace soit toujours effectué en avant du balai quel que soit le sens de déplacement du bras.

L'invention consiste, mises à part les dispositions exposées ci-dessus, en un certain nombre d'autres dispositions dont il sera plus explicitement question ci-après à propos d'un exemple de réalisation décrit avec référence aux dessins ci-annexés, mais qui n'est nullement limitatif.

La figure 1, de ces dessins, est une vue schématique, en élévation, avec parties en coupe, d'un bras d'essuie-glace conforme à l'invention.

La figure 2 est une vue schématique de côté du bras de la figure 1.

La figure 3 est une coupe transversale suivant la ligne III-III, figure 1, à plus grande échelle.

La figure 4 est une vue en coupe verticale, à plus grande échelle, de la base du bras d'essuie-glace et de la chape d'articulation montée sur l'arbre d'entraînement.

La figure 5 est une vue de dessus, avec parties coupées, de la base du bras et de la chape d'articulation de la figure 4.

La figure 6 est une coupe axiale verticale suivant la ligne VI-VI, figure 7, au niveau de l'étrier d'articulation du balai d'essuie-glace, avec joint tournant pour l'alimentation en liquide de lavage.

La figure 7 est une coupe suivant la ligne VII-VII, figure 1, à plus grande échelle.

La figure 8 est une vue schématique en élévation de la commande d'inversion de l'alimentation des gicleurs du bras d'essuie-glace.

La figure 9 est une vue de bout d'un gicleur intermédiaire.

La figure 10 est une vue en coupe suivant la ligne X-X, figure 9.

La figure 11 est une vue en coupe transversale d'un gicleur d'extrémité.

La figure 12, enfin, est une vue en coupe suivant la ligne XII-XII, figure 11.

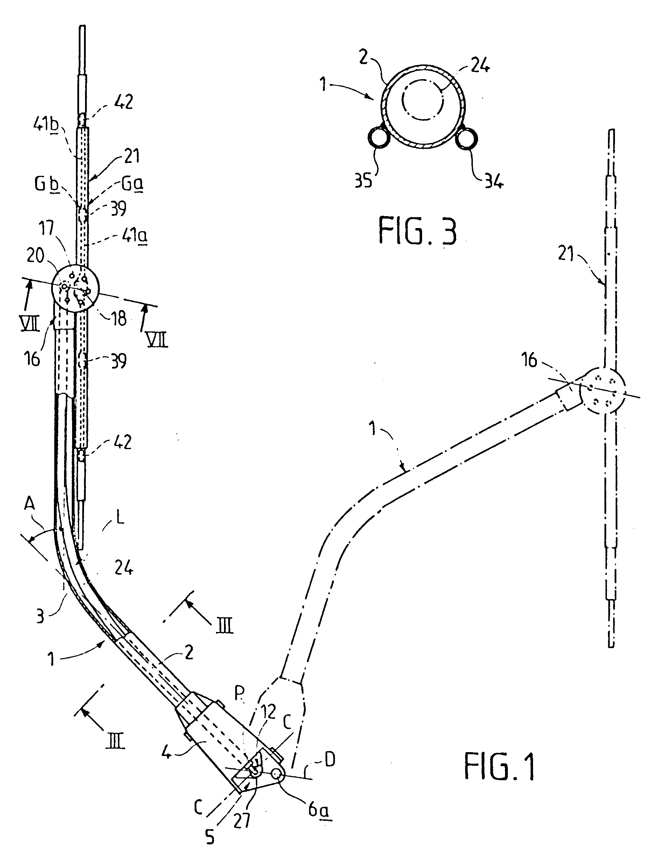

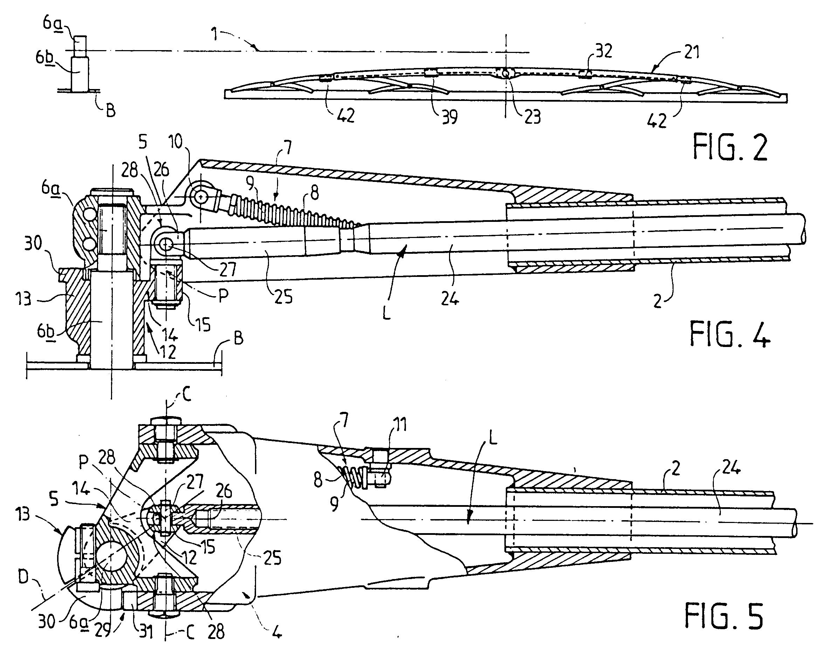

En se reportant aux dessins, notamment aux figures 1 et 2, on peut voir un bras d'essuie-glace 1, destiné à un train à très grande vitesse, formé par un élément tubulaire 2 coudé suivant un angle A, par exemple d'environ 30°, dans une région moyenne 3, appelée "coude".

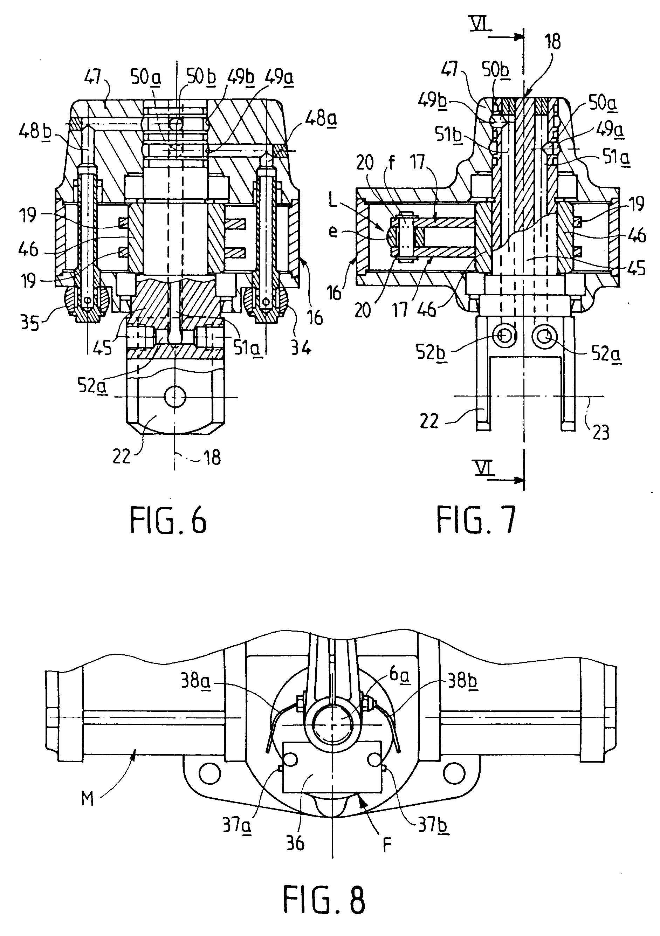

A une extrémité, le bras 1 comporte une base 4 articulée sur une chape 5 montée sur un arbre d'entraînement 6a propre à communiquer au bras un mouvement de rotation alternatif. L'arbre 6 a peut être entraîné par un moteur pneumatique M, partiellement représenté sur la figure 8. L'arbre 6a traverse, librement en rotation, un manchon 6b, coaxial, fixe relativement au bâti B.

La base 4 est articulée, au voisinage de l'arbre d'entraînement 6a, autour d'un axe C-C (figure 5) sensiblement parallèle à la surface de la glace à essuyer pour permettre le relevage du bras 1. Des moyens élastiques 7 (figure 4) de rappel du bras contre la glace sont prévus. Ces moyens élastiques 7 peuvent comprendre, de chaque côté du plan longitudinal médiateur de la base 4, un ressort de compression 8 monté sur une tige télescopique 9 articulée à une extrémité 10 sur la chape 5 et, à l'autre extrémité 11 sur la base 4. L'extrémité 10 est plus éloignée de la glace à essuyer que l'extrémité 11 de sorte que la tige télescopique 9 est inclinée, vers la glace à essuyer. La poussée du ressort 8 a tendance à allonger la tige 9 et à appliquer le bras 1 contre la glace.

Un organe d'orientation 12, fixe par rapport au bâti B de la glace, est prévu au voisinage de l'arbre d'entraînement 6a. Cet organe 12, comme visible sur la figure 4, est constitué par une sorte de support comprenant un manchon cylindrique fendu 13 de diamètre relativement important traversé par le manchon 6b et fixé sur lui par serrage de deux vis, pour réaliser le point fixe. L'extrémité supérieure de ce manchon 13 comporte une extension radiale 14 dont les bords convergent, en s'éloignant de l'axe du manchon 13, vers une portée cylindrique 15 de plus petit diamètre constituant le point d'appui fixe P.

L'extrémité 16 (figures 1 et 7) du bras 1 éloignée de l'arbre d'entraînement 6a porte un levier 17 monté rotatif relativement au bras 1, suivant un axe 18 sensiblement parallèle à l'arbre d'entraînement 6a. Le levier 17 peut être agencé sous la forme d'un disque 19, muni d'une extension radiale dont une partie, ou point, 20 écartée de l'axe 18 constitue l'extrémité. Le balai d'essuie-glace 21 porté suivant l'axe 18, garde une orientation fixe relativement au levier 17. Le levier 17 peut être formé par un ensemble de deux plaquettes identiques, écartées l'une de l'autre suivant une direction perpendiculaire à leur plan, et entre lesquelles est engagée une tête d'articulation e traversée par un axe f, lié aux plaquettes.

Un étrier 22 (voir figure 7) porté selon l'axe 18, lié au levier 17, supporte l'armature du balai 21 avec une possibilité de rotation du balai autour d'un axe transversal 23 orthogonal à la direction longitudinale du balai et sensiblement parallèle à la surface moyenne de la glace à essuyer.

Des moyens de liaison L sont prévus à l'intérieur de l'élément tubulaire 2 entre le susdit point d'appui fixe P et l'extrémité 20 du levier afin de maintenir le levier 17 parallèle à une direction fixe D qui, dans l'exemple considéré, correspond à la droite passant par l'axe géométrique de l'arbre 6 et le centre de la portée 15 (voir figure 5).

Dans l'exemple considéré, les moyens de liaison L sont agencés de manière à maintenir une longueur constante entre le point P et l'extrémité 20, lors de la rotation du bras 1 autour de l'arbre 6. Ces moyens de liaison L comprennent, avantageusement, une tige flexible 24, notamment en matière plastique, disposée à l'intérieur de l'élément tubulaire 2.

Comme visible sur la figure 1, la tige flexible 24 s'étend de l'organe d'appui fixe P jusqu'à l'extrémité 20 du levier, en traversant le coude 3 de l'élément tubulaire 2. La tête d'articulation e (figure 7) est fixée dans l'extrémité de la tige 24.

La tige flexible 24 est suffisamment résistante pour ne pas s'aplatir et garder une longueur constante lors de sa flexion.

A son extrémité voisine du point d'appui P, la tige 24 est équipée d'une tête 25 munie d'une partie plate 26 dont le plan est sensiblement parallèle à l'axe de l'arbre 6, cette partie 26 étant traversée par un trou propre à recevoir un axe d'articulation 27. Une chape 28, comportant deux ailes entre lesquelles est reçue la partie plate 26, est montée rotative dans la portée 15 prévue au point P, autour d'un axe parallèle à celui de l'arbre 6 ; l'axe 27 est porté par un trou prévu dans chacune des ailes de la chape 28.

L'ensemble est agencé de manière que pour une position déterminée, appelée position neutre ou de repos du bras d'essuie-glace 1, l'axe d'articulation C de la base 4 sur la chape 5 est aligné avec l'axe 27 de sorte qu'il est possible de relever le bras 1 par rotation autour de l'axe commun.

En variante, la tige flexible 24 pourrait n'être prévue que sur une fraction de la longueur de l'élément tubulaire 2 incorporant le coude 3, cette tige flexible étant prolongée à chacune de ses extrémités par des tiges rigides rectilignes, alors articulées respectivement sur le point d'appui fixe P et sur l'extrémité 20 du levier.

Des moyens de butée 29 (voir figure 5) sont prévus entre la base 4 du bras et le manchon 13 pour s'opposer au relevage du bras 1 lorsque la position angulaire du bras relativement au bâti B est différente de celle qui assure l'alignement de l'axe C-C et de l'axe 27. Ces moyens de butée 29 comprennent, par exemple, au niveau du manchon 13, une collerette 30 (figure 5) et, au niveau de la base 4, un ergot 31 (figure 5) propre à s'appuyer contre la collerette 30 et à empêcher le relevage lorsque la position du bras ne correspond pas à la position angulaire prédéterminée ; par contre, cet ergot 31 peut passer au-delà de la collerette 30, ce qui autorise le relevage du bras, pour la position angulaire neutre ou de repos représentée sur la figure 5.

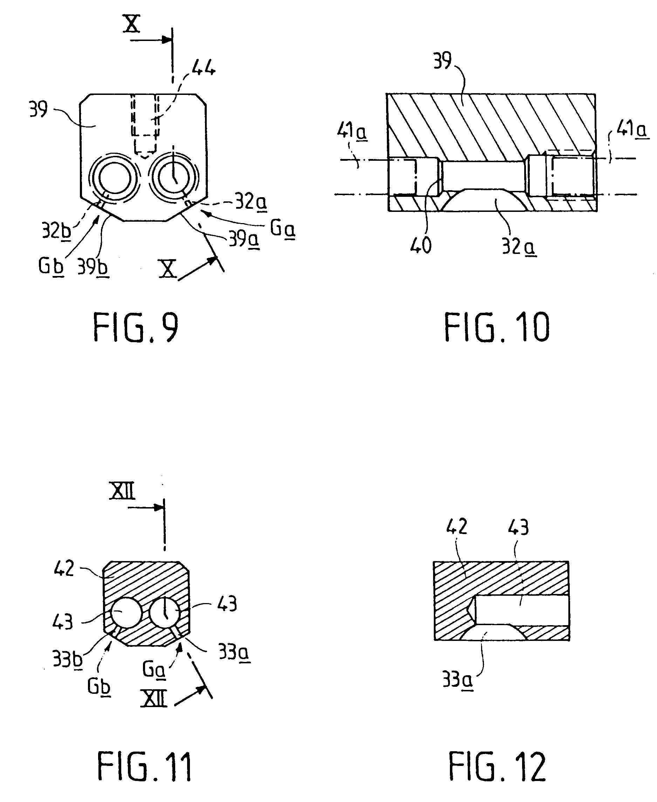

Le bras 1 est équipé, au niveau du balai 21, de deux séries Ga, Gb de gicleurs 32a, 32b, 33a, 33b (figures 9 à 12) pour le nettoyage de la glace. Chaque série Ga, Gb est alimentée en liquide par une conduite indépendante 34, 35 (voir figure 3) portée par le bras 1, sous sa partie inférieure. Ces conduites sont constituées par des tubes de diamètre réduit fixés notamment par soudage sous le bras 1.

Des moyens d'alimentation F (voir figure 8) sont prévus pour alimenter alternativement chaque conduite 34, 35 et donc chaque série de gicleurs Ga, Gb lors du mouvement d'aller et retour du bras 1. Ces moyens d'alimentation F comprennent un distributeur inverseur 36 relié à une source d'alimentation en liquide (non représentée) constituée par exemple par une pompe. Le distributeur 36 comporte deux clapets opposés dont les extrémités 37a, 37b font saillie vers l'extérieur.

L'arbre 6a d'entraînement du moteur M entraîne deux lames ressorts 38a, 38b. A chaque fin de course, l'une des lames 38a, 38b vient enfoncer le poussoir correspondant 37a, 37b pour inverser l'alimentation des conduites 34, 35.

L'arrêt de l'arrosage est commandé indépendamment du bras par un distributeur programmé, le côté des gicleurs situé dans le sens du démarrage du bras restant prêt à fonctionner (clapet appuyé par le ressort), dès le démarrage du bras.

Comme visible sur la figure 9, les gicleurs 32a de la série Ga ont leur axe incliné suivant une direction, tandis que les gicleurs 32b de l'autre série ont leur axe incliné suivant une autre direction par rapport à la direction orthogonale à la surface de la glace à essuyer. Par exemple, l'inclinaison de l'axe des gicleurs 32a est telle que le jet de liquide projeté par ces gicleurs se trouve en avant du balai d'essuie-glace 21 lorsque le bras 1 tourne dans le sens d'horloge autour de l'arbre 6a selon la figure 1. L'inclinaison de l'axe des gicleurs 32b permet au jet projeté par ces gicleurs d'être en avant du balai 21 lorsque le bras 1 tourne dans le sens contraire d'horloge autour de l'arbre 6a. Le branchement des deux séries de gicleurs Ga, Gb sur le distributeur 36 est assuré de manière que l'alimentation des gicleurs assure l'arrosage de la glace toujours en avant du balai 21 quel que soit le sens de déplacement du bras 1.

Comme visible sur la figure 9, les gicleurs 32a, 32b, en un endroit déterminé, sont prévus dans un bloc 39, par exemple métallique, à section transversale sensiblement rectangulaire. Des pans coupés sont prévus sur les bords inférieurs, perpendiculairement à la direction des gicleurs 32a, 32b.

Chaque gicleur, tel que 32a, comme visible sur la figure 10, est constitué par une fente longitudinale, par exemple obtenue par fraisage, le plan moyen de cette fente correspondant à l'inclinaison souhaitée. La fente débouche, à l'intérieur du bloc, dans une conduite 40 traversant ce bloc, d'un bout à l'autre, longitudinalement. A chaque extrémité, la conduite 40 comporte des parties de plus fort diamètre, taraudées, permettant le raccordement à une conduite 41a, 41b, de préférence souple (voir figures 1 et 2).

Le bloc 39 de la figure 9 correspond à un bloc intermédiaire, raccordé à chaque extrémité longitudinale à une conduite.

La figure 11 montre un bloc 42 d'extrémité où l'on retrouve des gicleurs 33a, 33b semblables à ceux décrits précédemment. La seule différence réside dans le fait que la conduite 43, prévue à l'intérieur du bloc 42, et dans laquelle débouche le gicleur 33a est fermée à l'extrémité destinée à être tournée vers l'extrémité du balai 21. L'extrémité ouverte de la conduite 43 est reliée également à une conduite telle que 41a.

Les blocs 39 et 42 comportent, dans leur partie supérieure, des trous taraudés 44 pour leur fixation sur l'armature du balai 21.

Les figures 6 et 7 illustrent un exemple de moyens de raccordement entre les tubes 34, 35 du bras 1 et les conduites 41a, 41b des deux séries de gicleurs à l'aide d'un joint tournant prévu au niveau d'une tête rotative portant le balai, à l'extrémité 16 du bras.

L'étrier 22 est porté par un arbre 45 monté rotatif dans la tête et propre à être entraîné en rotation par un manchon 46 calé sur cet arbre, ce manchon étant lui-même entraîné en rotation par le levier 17. La partie supérieure 47 de cette tête est fixe relativement au bras 1 et comporte des conduites internes 48a, 48b raccordées, sous la face inférieure de la tête, aux conduites 34, 35 équipées de raccords appropriés.

Dans la partie haute de la tête, les conduites 48a, 48b débouchent dans des gorges circulaires 49a, 49b avec lesquelles communiquent des alésages orientés radialement 50a, 50b prévus dans l'arbre 45. Des moyens d'étanchéité sont prévus pour isoler, suivant le sens axial de l'arbre 45, les gorges 49a, 49b.

Chaque alésage 50a, 50b communique avec un canal longitudinal 51a, 51b qui lui est associé et qui s'étend parallèlement à la direction axiale de l'arbre 45 jusqu'à un conduit transversal 52a, 52b débouchant à chaque extrémité de manière à être relié par les conduites 41a, 41b aux gicleurs des séries Ga, Gb situés de part et d'autre de l'arbre 45. Cet arbre 45 peut donc tourner librement dans la partie supérieure 47, relativement au bras 1 sous l'action du levier 17, tout en assurant le raccordement pour le liquide.

Ceci étant, le fonctionnement du bras d'essuie-glace conforme à l'invention résulte des explications qui précèdent.

En position de repos, le bras d'essuie-glace 1 occupe la position en traits pleins de la figure 1.

Lorsque le moteur M est mis en marche, le bras 1 entame son mouvement par une course aller dans le sens d'horloge autour de l'arbre 6a jusqu'à la position représentée en traits mixtes sur cette même figure 1. Il y a alors inversion du mouvement et le bras 1 revient, dans le sens anti-horloge, à la position en traits pleins et ainsi de suite.

L'ensemble du bras tourne autour de l'axe géométrique de l'arbre 6a alors que le point fixe P reste immobile relativement au bâti. Il en résulte que la position de ce point P relativement au bras 1 et à la chape 5 varie lors de la rotation du bras.

La tige flexible 24, située à l'intérieur du bras, de longueur constante, va se déformer à l'intérieur du bras 1, au cours du mouvement de balayage, et maintenir une distance constante entre le point P et le point 20 du levier 17. En outre, la distance entre l'arbre et l'axe d'articulation 18 du levier porté par le bras rigide 1 reste constante. Ainsi, la droite passant par l'axe 18 et le point 20, au cours des déplacements du bras 1, va rester parallèle à la direction fixe D passant par l'axe de l'arbre 6a et le point P.

Le balai 21, comme illustré sur la figure 1, va rester parallèle à une direction fixe au cours du balayage.

Ce résultat est obtenu à l'aide d'un bras 1 peu encombrant, résistant, et offrant une faible prise au vent ; les moyens de liaison L formés par le tube 24 sont à l'abri à l'intérieur de ce bras 1.

Si l'utilisateur souhaite effectuer un nettoyage de la glace, il lui suffit d'assurer l'alimentation en liquide des conduites 34 et 35, par exemple par mise en marche d'une pompe d'alimentation, pour obtenir l'arrosage de la glace, par les gicleurs 32a, 32b, toujours en avant du balai 21 quel que soit le sens de son mouvement. Cet arrosage est donc particulièrement efficace puisqu'il est suivi immédiatement de l'essuyage assuré par le balai 21.

Dans l'exemple de réalisation décrit, les moyens de liaison L, pour maintenir le balai 21 parallèlement à lui-même, font intervenir une tige flexible 24.

Selon une autre variante, les moyens de liaison L assurant une distance constante entre le point P et l'extrémité 20 feraient intervenir un volume de liquide incompressible contenu dans une canalisation qui, à chaque extrémité, serait munie d'un piston mobile prolongé par une tige reliée respectivement au point P et à l'extrémité 20.

## Revendications

1. Bras d'essuie-glace, notamment pour véhicule à grande vitesse, ce bras étant destiné à être monté, à une extrémité, sur un arbre d'entraînement (6a) propre à lui communiquer un mouvement de rotation alternatif, ledit bras (1) étant équipé, à son extrémité éloignée dudit arbre, d'un balai d'essuie-glace (21) et étant articulé, au voisinage de l'arbre d'entraînement, sur un axe (C-C) sensiblement parallèle à la surface de la glace à essuyer, le bras étant rappelé par des moyens élastiques (7) contre la glace, ledit bras d'essuie-glace (1) étant formé d'un élément tubulaire (2) ; un organe d'orientation (12) comportant un point d'appui (P) fixe par rapport au bâti de la glace étant prévu au voisinage de l'arbre d'entraînement ; l'extrémité (16) du bras éloignée de l'arbre d'entraînement (6a) portant un levier (17) monté rotatif, relativement au bras, autour d'un axe (18) sensiblement parallèle à l'arbre d'entraînement, le balai d'essuie-glace (21) étant porté par ce levier, et des moyens de liaison (L) articulés sur le point d'appui fixe (P) étant prévus à l'intérieur de l'élément tubulaire (2) constituant le bras, de manière à maintenir une longueur constante entre le susdit point d'appui fixe (P) et un point (20) du levier (17) lors de la rotation du bras, ledit bras comportant une base (4) articulée sur une chape (5) montée sur l'arbre d'entraînement (6a), caractérisé par le fait que les moyens de liaison (L) et les articulations sont agencés afin de maintenir le levier (17) parallèle à une direction (D) fixe lors de la rotation du bras (1), le balai d'essuie-glace (21) lié au levier (17) se déplaçant ainsi parallèlement à lui-même, et, qu'en outre, les articulations de la base (4) sur la chape (5) du bras (1) et des susdits moyens de liaison (L) sur le point d'appui fixe (P) sont disposées de manière à avoir leurs axes (C-C ; 27) alignés pour une position angulaire déterminée du bras (1) relativement au bâti et à permettre le relevage du bras, des moyens de butée (29) étant prévus entre la base du bras (1) et la chape pour s'opposer au relevage du bras lorsque la position angulaire du bras relativement au bâti est différente de celle assurant l'alignement des susdits axes.

2. Bras d'essuie-glace selon la revendication 1, caractérisé par le fait que l'élément tubulaire (2) constituant le bras (1) est coudé.

3. Bras d'essuie-glace selon la revendication 1 ou 2, caractérisé par le fait que les moyens de liaison (L) comprennent une tige flexible (24), notamment en matière plastique, disposée à l'intérieur de l'élément tubulaire (2).

4. Bras d'essuie-glace selon la revendication 3, caractérisé par le fait que la tige flexible (24) s'étend de l'organe d'appui fixe (12) jusqu'au point (20) du levier (17), en traversant le coude (3) de l'élément tubulaire (2).

5. Bras d'essuie-glace, selon l'une quelconque des revendications précédentes, caractérisé par le fait qu'il est équipé, au niveau du balai (21), de deux séries (Ga, Gb) de gicleurs (32a, 33a ; 32b, 33b) en vue du nettoyage de la glace, chaque série (Ga, Gb) étant alimentée en liquide par une conduite indépendante (34, 35) portée par le bras.

6. Bras d'essuie-glace, selon la revendication 5, caractérisé par le fait que des moyens d'alimentation (F) sont prévus pour alimenter successivement chaque série (Ga, Gb) de gicleurs lors des mouvements d'aller et retour du bras (1).

7. Bras d'essuie-glace selon la revendication 5 ou 6, caractérisé par le fait que les gicleurs (32a, 33a) d'une série (Ga) ont leurs axes inclinés suivant une direction tandis que les gicleurs (32b, 33b) de l'autre série (Gb) ont leurs axes inclinés suivant une autre direction, l'alimentation des gicleurs étant conçue de manière que l'arrosage de la glace soit toujours effectué en avant du balai quel que soit le sens de déplacement du bras.

## Claims

1. Windscreen wiper arm, particularly for a high-speed vehicle, this arm being intended to be mounted, at one end, on a drive shaft (6a) capable of imparting to it an alternating rotational movement, the said arm (1) being equipped at its end remote from the said shaft with a windscreen wiper blade (21) and being articulated in the vicinity of the drive shaft on an axis (C-C) which is substantially parallel to the surface of the windscreen to be wiped, the arm being returned by elastic means (7) against the windscreen, the said windscreen wiper arm (1) being formed of a tubular element (2); an orientation member (12) including a support point (P) which is fixed with respect to the supporting structure of the windscreen being provided in the vicinity of the drive shaft, the end (16) of the arm remote from the drive shaft (6a) carrying a lever (17) mounted so that it can rotate in relation to the arm about an axis (18) which is substantially parallel to the drive shaft, the windscreen wiper blade (21) being carried by this lever; and linkage means (L) articulated onto the fixed support point (P) being provided inside the tubular element (2) constituting the arm so as to keep a constant length between the abovementioned fixed support point (P) and a point (20) on the lever (17) when the arm rotates, the said arm including a base (4) which is articulated onto a clevis (5) mounted on the drive shaft (6a); characterized in that the linkage means (L) and the articulations are set out in order to keep the lever (17) parallel to a fixed direction (D) when the arm (1) rotates, the windscreen wiper blade (21) connected to the lever (17) thus moving parallel to itself; and that furthermore the articulations of the base (4) onto the clevis (5) of the arm (1) and of the abovementioned linkage means (L) onto the fixed support point (P) are arranged so as to have their axes (C-C; 27) aligned for a given angular position of the arm (1) relative to the supporting structure and so as to allow the arm to be lifted, stop means (29) being provided between the base of the arm (1) and the clevis in order to oppose the lifting of the arm when the angular position of the arm relative to the supporting structure is different from the one providing the alignment of the abovementioned axes.

2. Windscreen wiper arm according to Claim 1, characterized in that the tubular element (2) constituting the arm (1) is bent.

3. Windscreen wiper arm according to Claim 1 or 2, characterized in that linkage means (L) comprise a flexible rod (24), particularly made from plastic, arranged inside the tubular element (2).

4. Windscreen wiper arm according to Claim 3, characterized in that the flexible rod (24) extends from the fixed support member (12) as far as the point (20) on the lever (17), passing through the bend (3) of the tubular element (2).

5. Windscreen wiper arm according to any one of the preceding claims, characterized in that it is equipped, in the region of the blade (21), with two series (Ga, Gb) of nozzles (32a, 33a; 32b, 33b) for the purpose of cleaning the windscreen, each series (Ga, Gb) being supplied with liquid by an independent pipe (34, 35) carried by the arm.

6. Windscreen wiper arm according to Claim 5, characterized in that the supply means (F) are provided in order to supply each series (Ga, Gb) of nozzles in succession during the to-and-fro movements of the arm (1).

7. Windscreen wiper arm according to Claim 5 or 6, characterized in that the nozzles (32a, 33a) of one series (Ga) have their axes inclined in one direction, while the nozzles (32b, 33b) of the other series (Gb) have their axes inclined in another direction, the supply to the nozzles being designed so that the windscreen is always sprinkled ahead of the blade regardless of the direction of travel of the arm.

## Patentansprüche

1. Scheibenwischerarm, insbesondere für Hochgeschwindigkeitsfahrzeuge, wobei der Arm mit einem Ende an einer Antriebswelle (6a) zu befestigen ist, die ihn in eine hin- und herpendelnde Drehbewegung versetzen kann, wobei der Arm (1) an seinem von der Welle entfernten Ende ein Wischblatt (21) aufweist und wobei er um eine Achse (C-C), die in der Nähe der Antriebswelle im wesentlichen parallel zur Oberfläche des zu wischenden Glases verläuft, schwenkbar ist, wobei der Arm mit elastischen Mitteln (7) gegen das Glas gedrückt wird, wobei der Scheibenwischerarm (1) von einem röhrenförmigen Bauteil (2) gebildet wird; wobei ein Orientierungsmittel (12) mit einem, bezogen auf den Scheibenrahmen, feststehenden Unterstützungspunkt (P) in der Nähe der Antriebswelle vorgesehen ist; wobei das von der Antriebswelle (6a) entfernte Ende (16) des Arms einen, bezogen auf den Arm, drehbar montierten Hebel (17) aufweist, dessen Drehachse (18) im wesentlichen parallel zur Antriebswelle verläuft, wobei das Wischblatt (21) von dem Gelenk gehalten wird und am Unterstützungspunkt (P) angeschlossene Verbindungsmittel (L) im Inneren des den Arm bildenden röhrenförmigen Bauteils (2) so angeordnet sind, daß die Entfernung zwischen dem Unterstützungspunkt (P) und einem Punkt (20) des Hebels (17) bei der Drehung des Arms konstant bleibt, wobei der Arm einen Sockel (4) aufweist, der auf einem auf der Antriebswelle (6a) montierten Gehäuse (5) drehbar befestigt ist,
**dadurch gekennzeichnet**, daß die Verbindungmittel (L) und die Gelenke so angeordnet sind, daß der Hebel (17) bei der Drehung des Arms (1) parallel zu einer festen Richtung (D) orientiert bleibt, so daß sich das mit dem Hebel (17) verbundene Wischblatt (21) parallel zu sich selbst verschiebt, und daß außerdem die Gelenke des Sockels (4) auf dem Gehäuse (5) des Arms (1) und die Verbindungsmittel (L) auf dem festen Unterstützungspunkt (P) so angeordnet sind, daß ihre Achsen (C-C; 27) in einer Winkellage fluchten, die von dem Arm (1), bezogen auf den Rahmen, festgelegt ist und daß das Anheben des Armes ermöglicht wird, wobei Anschlagmittel (29) zwischen dem Sockel des Armes (1) und dem Gehäuse vorgesehen sind, um das Anheben des Armes zu verhindern, wenn die Winkellage des Arms zum Rahmen anders ist, als diejenige, die das Fluchten der Achsen gewährleistet.

2. Scheibenwischerarm gemäß Anspruch 1, dadurch gekennzeichnet, daß das röhrenförmige Bauteil (2), das den Arm (1) bildet, gekrümmt ist.

3. Scheibenwischerarm gemäß Anspruch 1 oder 2, dadurch gekennzeichnet, daß die Verbindungsmittel (L) eine insbesondere aus Kunststoff bestehende, flexible Stange (24) umfassen, die im Inneren des röhrenförmigen Bauteils (2) angeordnet ist.

4. Scheibenwischerarm gemäß Anspruch 3, dadurch gekennzeichnet, daß sich die flexible Stange (24) von dem feststehenden Unterstützungsmittel (12) bis zu dem Punkt (20) des Hebels (17) erstreckt, wobei sie der Biegung (3) des röhrenförmigen Bauteils (2) folgt.

5. Scheibenwischerarm gemäß einem der vorhergehenden Ansprüche, dadurch gekennzeichnet, daß er an den Wischblättern (21) zwei Reihen (Ga, Gb) Spritzdüsen (32a, 33a; 32b, 33b) zur Reinigung der Scheibe aufweist, wobei jede Reihe (Ga, Gb) durch unabhängige, an dem Arm befestigte Leitungen (34, 35) mit Flüssigkeit beschickt wird.

6. Scheibenwischerarm gemäß Anspruch 5, dadurch gekennzeichnet, daß Beschickungsmittel (F) zur abwechselnden Versorgung jeder Reihe (Ga, Gb) der Spritzdüsen bei der Hin- und Herbewegung des Armes (1) vorgesehen sind.

7. Scheibenwischerarm gemäß Anspruch 5 oder 6, dadurch gekennzeichnet, daß die Achsen der Spritzdüsen (32a, 33a) der einen Reihe (Ga) in eine Richtung geneigt sind, während die Achsen der Spritzdüsen (32b, 33b) der anderen Reihe (Gb) in eine andere Richtung geneigt sind, wobei die Versorgung der Spritzdüsen so vorgesehen ist, daß das Bespritzen der Scheibe immer vor dem Wischblatt, in Bewegungsrichtung des Armes gesehen, stattfindet.
